# EUROPEAN PATENT SPECIFICATION

(11) **EP 0 468 979 B1**
(45) Date of publication and mention of the grant of the patent: **01.02.1995**
(21) Application number: 90905404.1
(22) Date of filing: 06.04.1990
(51) Int. Cl.: B05D 7/14, B05C 9/14, B05D 1/36, F16L 59/10

(54) **EPOXY/POLYOLEFIN COATING PROCESS**
VERFAHREN ZUR BESCHICHTUNG MIT EPOXIDHARZ UND POLYOLEFIN
PROCEDE D'APPLICATION DE REVETEMENT EN EPOXY/POLYOLEFINE

(30) Priority: 18.04.1989 GB 8908684
(43) Date of publication of application: 05.02.1992
(73) Proprietor: Du Pont Canada Inc., Mississauga, Ontario L5M 2H3 (CA); VALSPAR, INC., West Hill, Ontario M1E 4R6 (CA)
(72) Inventor: COX, James, John, William, Oakville, Ontario L6J 6H9 (CA); MATTHEWS, Christopher, Ernest, Oshawa, Ontario L5H 8C5 (CA)
(74) Representative: Harrison, David Christopher
(86) International application number: CA9000115
(87) International publication number: WO9012657

(56) References cited:
- EP-A- 0 057 823
- EP-A- 0 100 992
- AU-B- 419 658
- FR-A- 2 252 187
- GB-A- 1 048 846
- GB-A- 1 542 333
- GB-A- 2 076 693
- US-A- 4 621 399
- US-E- 30 006
- World Patent's Index Latest, Acc. No. 10788 E, week 06, 1982, D. Class A32,M13,A17,P42,P73, Derwent Publ. Ltd. (London, GB), & JP-A-56168862 (MITSUBISHI CHEM.IND. K.K.) 25 December 1981
- World Patent's Index, Acc. No. 44356 C, week 17, 1980, D. Class A32,A17,A88,Q67, Derwent Publ. Ltd. (London, GB), & JP-A-55063221 (MITSUBISHI CHEM. IND. K.K.) 14 May 1980
- World Patent's Index, Acc. No. 32733 X, week 18, 1976, D. Class A 32,M13,A18,A21,P42, Derwent Publ. Ltd. (London, GB), & JP-A-51030863 (NIPPON KOKAN K.K.) 17 March 1976

## Description

This invention relates to the coating of metal objects, and particularly metal pipes, with specialized epoxy/polyolefin coating compositions.

Buried metal pipelines employed to convey liquids e.g. petroleum products including crude oil and petroleum gases, are susceptible to substantial corrosion due to the moist, often acidic or alkaline, environments of the soil in which they are buried. Methods have been devised to reduce pipeline corrosion, but none appear to have adequately solved this potentially very serious problem. Two different types of methods have been used to attempt to protect pipelines from corrosion, and have been used both separately and together. Cathodic protection from corrosion is provided by a procedure involving the application of an electric potential between the metal of the pipe and the material, e.g. earth, that surrounds the pipe. The second method involves placing one or more coatings upon the outer surface of the pipe so as to physically protect the pipe surface from the corrosive environments that may be encountered by buried pipelines.

Epoxy resin coatings have been used extensively for protection of pipe surfaces, and one such composition is shown in Warnken, US-A-4 009 224. Polyolefin coatings also have been used.
In Sakayori et al., US-E-30 006, reissued 1979 May 22, a coating of a polyolefin modified by reaction with an unsaturated dicarboxylic organic acid or anhydride is applied upon a metal surface bearing a thin, preferably 5-10 micron, primer coating of an uncured epoxy resin to improve adhesion of the polyolefin to the pipe. Heating of the pipe occurs at the same time as or immediately after the application of the polyolefin. JP-A-51[1976]-30863 of K. Nagai et al, published 1976 March 16, describes the application of a polyethylene resin upon a cured epoxy resin coating that had been applied in powdered form to metal pipe. JP-A-55[1980]-63221 of S. Aoyanagi et al, published 1980 May 13, describes the application to a thinly coated, partially-gelled epoxy primer upon a metal tube, of a spirally-wrapped carboxylic acid-modified polyolefin film. JP-A-56[1981]-168862 of K. Iwaya et al, published 1981 December 25, discloses the application to a partially-gelled epoxy primer having a thickness of, for example 30-40 microns, upon a metal surface, of a mixture of a modified polyolefin having a melting point above 125°C and an unmodified polyolefin having a melting point below 125°C.

In US-A-4 621 399 a processing plant and method are shown for the progressive coating of a pipe as it passes through successive work stations.

We have now found a process for the manufacture of a metal pipe having a composite pipe coating that exhibits good adhesion to the pipe, is resistant to cathodic disbondment and other modes of coating failure and resistant to physical damage of the type to which pipeline sections may be subjected to during construction and installation of a buried pipeline.

In the process of the invention for the manufacture of coated metal pipe, metal pipe of the type used, for example, in the manufacture of petrochemical pipelines is heated to a temperature of at least about 200°C. A powdered epoxy resin composition comprising an epoxy resin having a softening point of at least about 90°C, and a curing agent therefor, is applied to the hot outer surface of the pipe, the resin composition melting and coalescing upon the hot pipe surface to form a coating having a thickness of at least about 300 microns (1 micron = 10⁻⁶ m = 1 »m) and desirably in the range of from about 300 to about 800 microns. Before the epoxy resin coating has completely cured but after partial cure, preferably after it has gelled, an epoxy resin-reactive polyolefin is applied to the hot outer surface of the epoxy resin; the epoxy-resin reactive polyolefin, which is referred to herein as modified polyolefin, is comprised of a polyolefin that has been grafted with an ethylenically unsaturated organic carboxylic acid or anhydride.

The heat capacity of the metal pipe and the temperature to which it is heated prior to application of the epoxy resin composition desirably are such as to provide enough energy to sequentially (a) melt the powdered epoxy resin and cause it to form a continuous coating upon the pipe surface, (b) melt and coalesce the subsequently applied modified polyolefin upon the surface of the incompletely cured epoxy resin, and (c) then substantially cure the layer of epoxy resin. The resulting composite coating adheres tenaciously to the metal pipe surface and provides the pipe with not only substantial resistance to cathodic disbondment but also with the ability to withstand substantial physical abuse and relatively high operating temperatures, especially when the modified polyolefin is modified polypropylene.

Accordingly, the present invention provides a method of coating metallic pipe for use in buried pipelines to provide the pipe with resistance to impact damage and to cathodic disbondment, which is characterised in that the molten coating of the epoxy resin has a thickness of at least 300 »m and in that the said heating of the pipe occurs before applying the epoxy resin composition and in allowing that composition to partly but not completely cure under the influence of the heat before applying the modified polyolefin.

The present invention further provides metal pipe suitable for buried pipeline use and bearing an outer composite coating resistant to impact damage and to cathodic disbondment, said coating comprising an inner layer of a cured epoxy resin composition having a thickness of at least 300 microns, and an outer coating of a modified polyolefin bonded to the inner layer, the outer laying having a thickness of at least 300 microns.

The present invention also provides a method of coating metal pipe to be used in the construction of a buried pipeline, comprising
(a) providing a heating station through which said pipe may be axially moved and heated to a temperature of at least about 200°C;
(b) providing a first coating station in line with the heating station and capable of applying a powder coating to the exterior of the heated pipe;
(c) providing a second coating station in line with the first coating station for applying a subsequent coating; characterised in
(d) applying a powdered epoxy resin composition to the pipe as it passes through the first coating station, the resulting coating melting, coalescing and subsequently gelling upon the surface of the pipe to a thickness of at least about 300 microns;
(e) applying a modified polyolefin, preferably a powdered modified polyolefin, to the pipe section as it passes through the second coating station, the modified polyolefin forming a polyolefin layer having a thickness of at least about 300 microns, said modified polyolefin being a homopolymer or copolymer of hydrocarbon alpha-olefins having 2-10 carbon atoms and which has been grafted with an ethylenically unsaturated organic carboxylic acid or anhydride;
the axial speed of the pipe through said stations and the distance between the first and second coating stations being adjusted to cause the polyolefin to be applied in the second coating station preferably shortly after gelation of the coating of the epoxy resin composition applied in the first coating station but in any event after partial but before complete curing thereof.

In the embodiments shown in the drawings:
Figure 1 is a perspective, schematic view of a portion of a pipeline coating apparatus; and
Figure 2 is a broken-away schematic view in partial cross section of a powder coating station employed in the apparatus of Figure 1.

### COATING MATERIALS

The powdered epoxy resin composition that is employed in the process and pipe of the present invention desirably employs an epoxy resin which is a polyglycidyl ether of a polyhydric phenol having a softening point (Durrans') of at least about 90°C and preferably from about 90 to about 130°C, and a curing agent for the epoxy resin. The preferred polyglycidyl ethers are those obtained from the condensation of bisphenol A (2,2'bis(hydroxy- phenyl)propane) and epichlorohydrin. Other polyhydric phenols which provide high melting polyglycidyl ethers include the phenol and o-cresol novolaks. Polyglycidyl ethers of the type described are available commercially e.g. from Dow Chemical Canada Inc. under the trade designation DER 663U, from Ciba-Geigy Canada Ltd. under the trade designation GT 7074 and from Shell Canada Products Ltd. under the trade designation Epon® 2002, or may be made by extending a lower molecular weight epoxy resin with, for example, bisphenol A. The epoxy resins employed in the present invention are high melting solids and are curable at temperatures in the range of from about 180 to about 250° C. Any of the various known latent curing agents may be employed, and among these may be listed amines e.g. dimethylethanolamine and methylene dianiline, amides e.g. dicyandiamide, especially accelerated dicyandiamide, and phenolic resins.

The epoxy resin compositions used in the invention may include flow control agents e.g. silicones an example of which is Modaflow® powder, pigments e.g. titanium dioxide, iron oxide and carbon black, fillers e.g. talc, calcium carbonate and mica, and other materials for the same purposes and effect as they are used in epoxy coating powders of the prior art. One example is a general purpose pipe coating of Dow Chemical Company that contains DER 642U epoxy resin (32 parts), DER 672 epoxy resin (32 parts), curing agent (24.5 parts), barium sulphate (8 parts), red iron oxide (2 parts) and Modaflow Powder II (1.5 parts). Another example is a pipe coating resin from Shell Chemical Company that contains Epon 2004 epoxy resin (78.2 parts), Epon Curing Agent P-104 (3.1 parts), Epon Resin 2002-FC-10 (5 parts, contains 10% by weight of Modaflow flow control agent), red iron oxide (1.5 parts), barium sulphate (11.7 parts) and Cab-O-Sil® M-5 silica (0.5 parts).

The powdered epoxy resin coating compositions may be manufactured by various methods known to the prior art; in a preferred embodiment, the coating compositions may be manufactured using a process in which the ingredients ire melt blended, cooled and ground into a powder. Epoxy resin coating compositions of the type described are available commercially, and one such resin is sold by Valspar, Inc. under the designation D-1003LD.

In general, the epoxy resin compositions of the invention, for reasons which will become apparent below, exhibit gel times of from about 2 to about 20 seconds (and preferably from about 5 to about 10 seconds) at pipe coating temperatures of about 250°C.

As used herein, gel time is defined as the time required for an epoxy resin composition to gel i.e. to exhibit a sudden increase in melt viscosity at a predetermined temperature. Gel time is measured by placing the epoxy resin composition on a hot metal surface, especially a hot plate, that is at the predetermined temperature. Using a spatula or other suitable device, a portion of the epoxy resin composition is drawn over the heated surface, to provide a sample having a thickness of approximately 200 microns. A sharp-edged object e.g. a paper clip, is then moved through the now molten layer of epoxy resin composition until a rapid increase in the melt viscosity of the composition is observed. The time, expressed in seconds, between when the epoxy resin composition is placed on the hot surface and the rapid rise in melt viscosity is the gel time.

It will be understood that the curing phenomenon of epoxy resin compositions involves chemical linking between polymer chains and that this linking (or "cross-linking") mechanism is initiated almost immediately upon application (e.g. by spraying) of the powdered epoxy upon a hot pipe surface and continues as the epoxy resin composition melts, coalesces and gels. After gelation, curing continues for a period of time e.g. about 90 seconds, that depends for instance on the temperature of the pipe, following the application of the powdered resin to the hot metal surface. Curing desirably is essentially complete within about 60 to about 180 seconds following application of the epoxy resin to the hot surface. Degree of cure may be measured by differential scanning calorimetry (DSC) using the procedure of the Canadian Standards Association (CSA) for fusion bonded epoxy resins para. 12.2 (page 28). As an example, the aforementioned epoxy resin composition 1003LD exhibits curing times of 50 seconds at 243°C, 60 seconds at 235°C and 70 seconds at 232°C.

The modified polyolefins employed in the invention are grafted homopolymers and copolymers of hydrocarbon alpha-olefins having 2-10 carbon atoms. For example, the polymers may be homopolymers or copolymers of ethylene, propylene, butene-1, 4-methyl pentene-1, hexene-1 and octene-1. The preferred polymers are homopolymers and copolymers of ethylene and propylene. The polymers of ethylene may include hompolymers of ethylene and copolymers of ethylene with, for example, butene-1, hexene-1 and/or octene-1. The polymers of propylene may include homopolymers of propylene and copolymers of propylene and ethylene, including so-called random and impact grades of polypropylene. As will be appreciated by persons skilled in the art, such polymers may have a broad range of molecular weights if the polymer is to be applied to the pipe as a powder coating but a more limited range if the polymer is to be applied by extrusion techniques; both procedures of applying the polyolefin are discussed herein.

The polymer is modified by grafting with at least one alpha,beta-ethylenically unsaturated carboxylic acid or anhydride, including derivatives of such acids and anhydrides. Examples of the acids and anhydrides, which may be mono-, di- or polycarboxylic acids, are acrylic acid, methacrylic acid, maleic acid, fumaric acid, itaconic acid, crotonic acid, itaconic anhydride, nadic anhydride, maleic anhydride and substituted maleic anhydride e.g. dimethyl maleic anhydride. Examples of the derivatives of the unsaturated acids are salts, amides, imides and esters e.g. mono- and disodium maleate, acrylamide, maleimide and dimethyl fumarate.

Methods for the grafting of monomers onto polymers are known in the art, and include solution grafting processes and melt grafting processes. Examples of the latter are described in US-A-4 612 155 of C.S. Wong and R.A. Zelonka, which issued 1986 September 16. The methods for the grafting of monomers onto polymers involve reacting polymer and monomer, usually in the presence of a catalyst e.g. an organic peroxide. Examples of the latter include bis(tert. alkyl peroxy alkyl) benzene, dicumyl peroxide and acetylenic diperoxy compounds. The amount of grafted monomer is usually in the range of 0.01 to 5% by weight of the polymer; in preferred embodiments, the amount of grafted monomer is in the range of 0.1 to 2% by weight of polymer. The characteristics of the polymer subjected to the grafting reaction will depend on the characteristics required in the grafted polymer that is to be coated over the epoxy resin composition, it being understood that some polymers, especially polypropylene, tend to undergo scission reactions in the presence of organic peroxides i.e. in the grafting process.

Additional polymers and/or stabilizing agents e.g. antioxidants for example phenolic antioxidants, UV stabilizers and heat stabilizers, pigments e.g. titanium dioxide and carbon black, extenders e.g. mica and glass, rust proofing agents, fillers e.g. talc, calcium carbonate and mica, slip agents and flame retardants or the like may be added to the polymer either subsequent to the grafting process but prior to extrusion or other recovery of the grafted polymer from the apparatus used in the grafting process or in subsequent steps. For example, ungrafted polymer that is identical to or different from the polymer that has been grafted may be added to the grafted polymer. Toughening agents e.g. elastomers and very low density polyethylenes e.g. with densities below about 0.910 g/cm³, may be added but such agents must be thoroughly dispersed in the polymer matrix. Other materials e.g. metal oxides or hydroxides, may also be added, especially in order to improve the adhesive characteristics of some grafted polymers, e.g. polypropylene.

### COATING PROCEDURE

A preferred coating procedure of the invention involves the use of two powder spray stations spaced along the path of travel of a preheated section of metal pipe, the first station being employed to spray the powdered epoxy resin composition upon the pipe surface and the second station being employed to spray the powdered, modified polyolefin upon the incompletely cured epoxy resin surface. Techniques and apparatus for spraying powdered coating materials upon hot pipe surfaces are known in the art, and are described, for example, in J. Protective Coatings and Linings, May 1988, Vol. 5, No. 5 p 26, by S.E. McConkey. In general, the powdered epoxy resin composition is entrained in an air stream and is directed by means of nozzles or jets against the hot pipe surface. A series of nozzles may be provided within a coating station through which lengths of preheated pipe are caused to pass. The nozzles may be positioned circumferentially of the pipe and spaced so as to provide a uniform coating of epoxy resin upon the pipe, or preferably are positioned on one side of the pipe with the coating composition being sprayed onto the pipe surface as the pipe, which is being rotated, passes axially through the coating station. A second, similar coating station is provided adjacent the first coating station, the second station being adapted to spray onto the epoxy-coated pipe the powdered, modified polyolefin employed in the instant invention. The coating of the powdered epoxy resin or the powdered, modified polyolefin or both may be aided through the use of electrostatic coating procedures in which the powdered material is provided with an electric charge. The coating stations as thus described may be partially enclosed within appropriate housings to avoid the escape of resin particles and/or contamination of the epoxy resin powder or modified polyolefin powder by the other.

While the method of the present invention is described herein with particular reference to the modified polyolefin being applied to the epoxy resin coating in the form of a powder, the modified polyolefin may also be applied in the form of molten polymer e.g. using extrusion coating techniques. For example, the modified polyolefin may be applied by use of an annular die through which the pipe is passed or by so-called side extrusion in which a tape or film is extruded onto rotating pipe.

In the application of the coatings, a length of pipe to be coated passes axially and with optional rotation along a predetermined path sequentially through the coating stations. Before entering the first (epoxy resin composition) coating station, the pipe passes through a heating station where it is heated to an appropriate coating temperature in the range of from about 200 to about 250°C; this may be appropriately accomplished by means of induction heating, infra red heating or gas fired ovens. As the hot pipe passes through the two coating stations, which are aligned with the heating station and with each other, it receives sequential coatings of the epoxy resin composition and the modified polyolefin.

In preferred embodiments of the invention, the epoxy resin powder has a particle size of up to about 250 microns, especially in the range of about 10 to about 150 microns. Similarly, the modified polyolefin powder has a particle size of up to about 350 microns, especially in the range of about 75 to about 175 microns.

In further preferred embodiments of the invention, the epoxy resin powder has a melting point in the range of about 90 to 130°C, especially in the range of about 95 to 125°C. Similarly, the modified polyolefin powder has a melting point in the range of about 105 to 175°C, especially in the range of about 120 to 165°C.

The coating of epoxy resin has a thickness of at least about 300 microns, preferably a thickness in the range of about 300 to 800 microns, especially in the range of about 350 to 600 microns. Similarly, the modified polyolefin has a coating thickness of at least about 300 microns, for example 300 to 7000 microns, preferably a thickness in the range of about 500 to 1500 microns, especially in the range of about 550 to 1000 microns.

It is critical to the present invention that the modified polyolefin be applied to the epoxy resin-coated surface of the pipe before the epoxy resin composition has substantially cured; preferably, the polyolefin powder is applied immediately, i.e. within about 5 to about 60 seconds, after application of the epoxy resin composition, and desirably within about 15 seconds following application to the pipe of the epoxy resin composition. This careful timing feature may be controlled, among other things, by controlling the temperature and thermal mass of the pipe, the speed at which the pipe moves through the coating stations and the spacing between the coating stations.

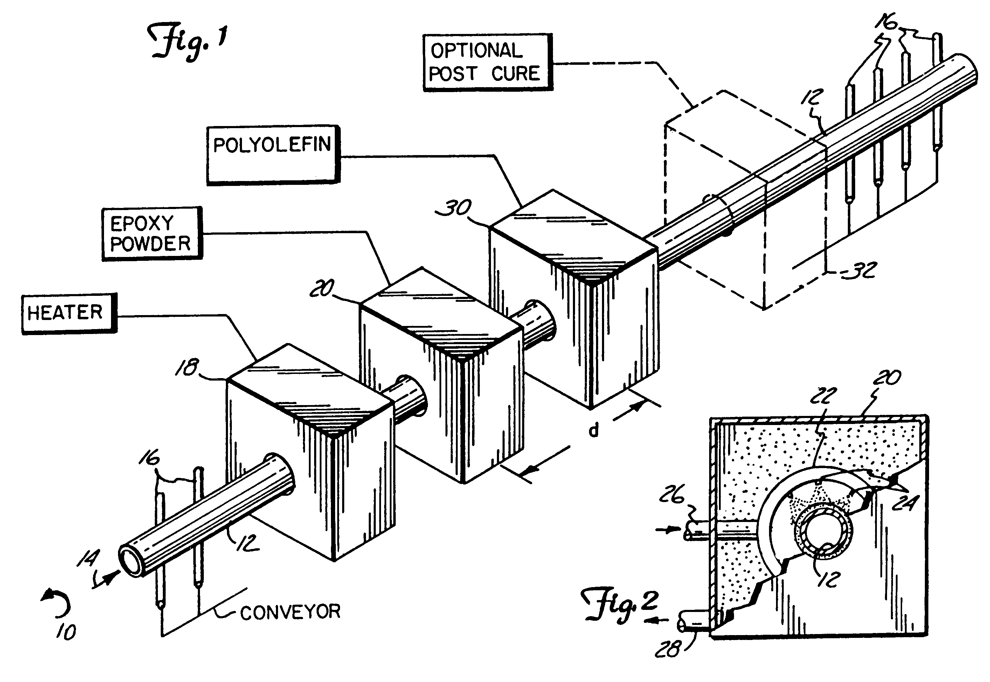

In the drawing, Figure 1 schematically shows a portion of a pipe coating apparatus of the type employed in the present invention. It will be understood that the entire pipe coating process employs various treatment stations both upstream and downstream from the apparatus shown in Figure 1. In a typical operation, stock lengths of pipe may be subjected to preheating, abrasive cleaning as by sandblasting and the like, sanding and grinding, and other surface conditioning operations before passing to the apparatus shown in Figure 1.

A section of pipe is shown at 12 in Figure 1 and is conveyed along an axial path of travel shown by the arrow 14 by means of conveyor rollers 16. The latter may be positioned at an angle to the axis of the pipe so as to impact an axial rotation to the pipe, as shown by the arrow 10. The section of pipe enters a heating station 18 in which the pipe is heated by various means such as passage through a gas fired oven and is thus heated to a temperature in the range of about 200-250°C. The pipe then passes directly to an epoxy powder coating station 20. This station comprising a chamber having pipe entrance and exit ports and within which an epoxy powder of the type described above is sprayed upon the hot pipe surface. A schematic view of the chamber is shown in Figure 2, the chamber including a supply ring 22 about the pipe 12, the supply ring having a series of radially inwardly oriented spray nozzles 24 adjacent one side of the pipe to direct epoxy powder against the surface of the rotating pipe. Supply and exhaust tubes 26, 28, are provided to supply air-entrained epoxy resin composition powder to and to exhaust air from the chamber. In practice, the interior of the chamber becomes filled with a cloud of epoxy resin particles.

Exiting from the epoxy powder coating station 20, the pipe passes to a polyolefin coating station 30 which is exemplified as a powder coating station and may be substantially identical to the epoxy powder coating station 20. In this chamber, air-entrained modified polyolefin powder is brought into contact with the hot surface of the epoxy-coated pipe and coalesces upon that surface to the desired thickness. The pipe exits the polyolefin powder coating station 30, and curing of the epoxy resin coating layer continues as the pipe passes downstream in the direction of the arrow 14. If desired, an additional heating station 32 may be provided downstream from the polyolefin powder coating station, the station 32 typically employing infrared heating means to further heat and thus flow out the modified polyolefin layer. The pipe section 12 is then quenched and is subjected to rigorous inspection to insure integrity of the coating.

In a pipe coating operation, a typical speed of travel of the pipe section 12 along the path 14 may average about 24 feet (about 7.3 metres) per minute. If the polyolefin powder is to be applied to the epoxy-coated pipe within about 15 seconds following application of the epoxy resin composition, then the distance "d" between the epoxy powder and polyolefin powder stations must be approximately 6 feet (about 1.8 metres). As noted above, it is essential that the polyolefin powder be applied before substantial curing of the epoxy resin coating, but desirably after gelation. In practice, this can be accomplished by varying the temperature to which the pipe is heated, the linear speed with which the pipe passes through the coating stations, and the distance "d" between the epoxy and the polyolefin coating stations. Commonly, adjustments are made to the axial speed of the pipe or to the distance "d" between the coating stations 20, 30, which may be made movable along the axial path of travel 14 of the pipe so that the distance between them may be varied.

The thicknesses of the epoxy resin and the polyolefin coating will depend upon the flow rates of the respective powders to the pipe surface and the speed of the pipe through the coating stations. The flow rates of powdered epoxy and powdered polyolefin may be adjusted as desired, as may the linear speed of pipe passing through the coating stations, the pipe speed, however, remaining strictly subject to the requirement that the polyolefin powder be applied to the epoxy resin composition layer before it has substantially cured but desirably after it has gelled.

An example of a typical pipe coating operation under the present invention may employ steel pipe having an outer diameter of about 12 inches (about 30.5 cm) and a wall thickness of 0.312 inches (0.78 cm). Using apparatus generally of the type described in connection with Figure 1, the pipe may be rotated and provided with an axial speed of about 24 feet (about 7.3 metres) per minute. Upon passing through the heating station 18, which may be a gas fired oven, the pipe may be heated to a temperature of 240°C. The pipe then immediately enters the epoxy powder coating station 20, epoxy powder being uniformly applied by means of a spray to the pipe surface and coalescing to form a wet film. The volume of epoxy resin composition applied is such as to provide a coating thickness of approximately 450 microns. The epoxy resin composition so applied may be that sold commercially by Valspar, Inc. under the designation D-1003LD, this powdered resin composition having gel time at 240°C of about 4-8 seconds. The distance "d" separating the epoxy and polyolefin coating stations may be approximately 4 feet (1.2 metres), this distance providing approximately 10 seconds between the epoxy and the polyolefin coating steps. In this manner, the polyolefin is applied to the epoxy resin coating approximately 2-6 seconds after the latter has gelled but well before curing has been completed. The modified polyolefin powder is applied to the epoxy resin-coated pipe at a rate sufficient to coat the epoxy to a thickness of approximately 800 microns, the total composite coating thus having a thickness of approximately 1250 microns. The modified polyolefin so applied may be Fusabond D-139GBLK, manufactured by Du Pont Canada Inc. The length of pipe 12 is supported a sufficient distance downstream from the modified polyolefin coating station so that the modified polyolefin coating has coalesced into a wet film and has cooled to a solid before contacting the downstream supporting rollers.

The resulting composite coating on the pipe is tightly adherent to the metal pipe surface and, because of the modified polyolefin outer coating, is highly resistant to impact damage or damage from rough handling. It has been found to be substantially impossible to physically separate the polyolefin coating layer from the epoxy layer at ambient temperature, the two layers being intimately bonded together. The thick epoxy resin coating layer provides the pipe with substantial resistance to cathodic disbondment and, together with the overlying polyolefin layer, serves to physically protect the pipe from damage of the type encountered in a pipeline laying operation.

Metal pipe commonly used in petroleum pipeline applications may have a wall thickness in the range of about 2-25 mm and an outer diameter in the range of about 2.5-150 cm; for example, when heated to coating temperatures in the range of about 240°C, such pipe has sufficient thermal mass i.e. it has absorbed sufficient heat energy, so that its surface temperature falls quite slowly. Unless quenched, the temperature of such a typical section of pipe heated to 240°C and then coated in accordance with the invention falls to 220°C only after about 1-3 minutes. Thus, the more critical parameters involve the speed of the pipe through the coating stations and the space between the stations.

The present invention is particularly intended for the coating of pipe intended for use in petroleum applications. However, the coated pipe may have uses in other applications in which protection against cathodic disbondment is important.

While a preferred embodiment of the present invention has been described, it should be understood that various changes, adaptations and modifications may be made therein, the scope of the invention being solely defined by the appended claims.

## Claims

1. A method of coating metallic pipe (12) for use in buried pipelines to provide the pipe with resistance to impact damage and to cathodic disbondment comprising:
a) heating the pipe to a temperature of at least 200°C,
b) applying to the outer surface of the heated pipe a powdered epoxy resin composition comprising an epoxy resin and a curing agent therefor, the epoxy resin composition having a softening point of at least 90°C, said powdered epoxy resin composition melting and coalescing upon the pipe to form a molten coating and
c) before the epoxy resin composition has cured, applying thereto a modified polyolefin, said modified polyolefin being a homopolymer or copolymer of hydrocarbon alpha-olefins having 2-10 carbon atoms and which has been grafted with an ethylenically unsaturated organic carboxylic acid or anhydride, the modified polyolefin forming an adherent and protective coating on the epoxy coating,
characterised in that the molten coating of the epoxy resin has a thickness of at least 300 »m and in that the said heating of the pipe occurs before applying the epoxy resin composition and in allowing that composition to partly but not completely cure under the influence of the heat before applying the modified polyolefin.

2. The method of Claim 1 in which the modified polyolefin is applied after the epoxy resin composition has gelled upon the pipe surface.

3. The method of Claim 1 or Claim 2 in which the gel time of the epoxy resin composition is between 2 and 20 seconds at pipe temperatures of 250°C.

4. The method of Claim 2 or Claim 3 in which the time period between gelation of the epoxy resin composition and application step (c) is not greater than 90 seconds.

5. The method of Claim 1 in which the modified polyolefin is applied in step (c) to a thickness in the range of 300 to 7000 »m.

6. The method of Claim 5 in which the epoxy coating has a thickness in the range of 300 to 800 »m.

7. The method of any one of Claims 1-6 in which the epoxy resin composition powder has a particle size of up to 250 »m.

8. The method of any one of Claims 1-7 in which the modified polyolefin powder has a particle size of up to 350 »m.

9. The method of Claim 8 in which the modified polyolefin has a melting point in the range of 105 to 175°C.

10. The method of Claim 7 in which the epoxy resin composition has a melting point in the range of 90 to 130°C.

11. The method of Claim 10 in which the epoxy resin composition has a gel time in the range of 2-20 seconds at 250°C.

12. The method of any one of Claims 1-11 in which the modified polyolefin is a modified homopolymer or copolymer of at least one of ethylene and propylene.

13. The method of Claim 12 in which the ethylenically unsaturated carboxylic acid or anhydride is maleic acid or maleic anhydride.

14. The method of any one of Claims 1-13 in which the thickness of the coating of modified polyolefin is in the range of 300 to 1500 »m.

15. The method of any one of Claims 1-14 in which the pipe has a thickness in the range of 2-25 mm.

16. Metal pipe suitable for buried pipeline use and bearing an outer composite coating resistant to impact damage and to cathodic disbondment, said coating comprising a cured epoxy resin composition having a thickness of at least 300 »m, and an outer layer of a modified polyolefin bonded to the inner layer, the outer layer having a thickness of at least 300 »m and said modified polyolefin being a homopolymer or copolymer of hydrocarbon alpha-olefins having 2-10 carbon atoms and which has been grafted with an ethylenically unsaturated organic carboxylic acid or anhydride, the modified polyolefin forming an adherent and protective coating on the epoxy layer.

17. A method of coating metal pipe (12) to be used in the construction of a buried pipeline, comprising:
(a) providing a heating station (18) through which said pipe may be axially moved and heated;
(b) providing a first coating station (20) in line with the heating station and capable of applying a coating to the exterior of the heated pipe;
(c) providing a second coating station (30) in line with the first coating station for applying a subsequent coating; characterised in
(d) passing metal pipe through the heating station and the first and second coating stations, the pipe being heated in the heating station to a temperature of at least 200°C;
(e) applying a powdered epoxy resin composition to the pipe as it passes through the first coating station, the resulting coating melting, coalescing and subsequently gelling upon the surface of the pipe to a thickness of at least 300 »m;
(f) applying a modified polyolefin to the pipe section as it passes through the second coating station, the modified polyolefin forming a polyolefin layer having a thickness of at least 300 »m, said modified polyolefin being a homopolymer or copolymer of hydrocarbon alpha-olefins having 2-10 carbon atoms and which has been grafted with an ethylenically unsaturated organic carboxylic acid or anhydride;
the axial speed of the pipe through said stations and the distance (d) between the first and second coating stations being adjusted to cause the polyolefin to be applied in the second coating station after partial but before complete curing of the epoxy resin composition.

18. The method of Claim 17 in which the modified polyolefin coating is applied after gelation of the coating of the epoxy resin composition applied in the first coating station.

19. The method of Claim 17 or Claim 18 in which the modified polyolefin is a powdered modified polyolefin.

## Patentansprüche

1. Verfahren zum Beschichten eines Metallrohrs (12) zur Verwendung für unterirdische Pipelines, um dem Rohr Beständigkeit gegen Beschädigung durch Stöße und gegen kathodische Auflösung zu verleihen, umfassend:
(a) Erhitzen des Rohres auf eine Temperatur von zumindest 200°C,
(b) Aufbringen einer gepulverten Epoxyharzzusammensetzung, umfassend ein Epoxyharz und einen Härter dafür, auf die äußere Oberfläche des erhitzten Rohres, wobei die Epoxyharzzusammensetzung einen Erweichungspunkt von zumindest 90°C aufweist und die gepulverte Epoxyharzzusammensetzung auf dem Rohr schmilzt und verschmilzt, um eine geschmolzene Beschichtung zu bilden, und
(c) Aufbringen eines modifizierten Polyolefins auf die Epoxyharzzusammensetzung, bevor diese ausgehärtet ist, wobei das modifizierte Polyolefin ein Homopolymer oder Kopolymer aus α-Olefinkohlenwasserstoffen mit 2 - 10 Kohlenstoffatomen ist, das mit einer ethylenisch ungesättigten organischen Carbonsäure oder -anhydrid gepfropft wurde, wobei das modifizierte Polyolefin einen haftenden und schützenden Überzug auf der Epoxybeschichtung bildet,
dadurch gekennzeichnet, daß die geschmolzene Beschichtung aus Epoxyharz eine Dicke von zumindest 300 »m besitzt, und dadurch, daß das Erhitzen des Rohres vor dem Aufbringen der Epoxyharzzusammensetzung erfolgt, und daß diese Zusammensetzung vor dem Aufbringen des modifizierten Polyolefins unter dem Einfluß der Hitze teilweise, aber nicht vollständig, aushärten gelassen wird.

2. Verfahren nach Anspruch 1, worin das modifizierte Polyolefin aufgebracht wird, nachdem die Epoxyharzzusammensetzung auf der Rohroberfläche geliert ist.

3. Verfahren nach Anspruch 1 oder 2, worin die Gelzeit der Epoxyharzzusammensetzung bei Rohrtemperaturen von 250°C zwischen 2 und 20 Sekunden liegt.

4. Verfahren nach Anspruch 2 oder 3, worin die Zeitspanne zwischen dem Gelieren der Epoxyharzzusammensetzung und dem Aufbringungsschritt (c) nicht mehr als 90 Sekunden beträgt.

5. Verfahren nach Anspruch 1, worin das modifizierte Polyolefin in Schritt (c) mit einer Dicke im Bereich von 300 - 7.000 »m aufgebracht wird.

6. Verfahren nach Anspruch 5, worin die Epoxybeschichtung eine Dicke im Bereich von 300 - 800 »m aufweist.

7. Verfahren nach irgendeinem der Ansprüche 1 - 6, worin das Pulver der Epoxyharzzusammensetzung eine Teilchengröße von bis zu 250 »m aufweist.

8. Verfahren nach irgendeinem der Ansprüche 1 - 7, worin das modifizierte Polyolefinpulver eine Teilchengröße von bis zu 350 »m aufweist.

9. Verfahren nach Anspruch 8, worin das modifizierte Polyolefin einen Schmelzpunkt im Bereich von 105 - 175°C aufweist.

10. Verfahren nach Anspruch 7, worin die Epoxyharzzusammensetzung einen Schmelzpunkt im Bereich von 90 - 130°C aufweist.

11. Verfahren nach Anspruch 10, worin die Epoxyharzzusammensetzung eine Gelzeit im Bereich von 2 - 20 Sekunden bei 250°C aufweist.

12. Verfahren nach irgendeinem der Ansprüche 1 - 11, worin das modifizierte Polyolefin ein modifiziertes Homopolymer oder Kopolymer von zumindest einem aus Ethylen und Propylen ist.

13. Verfahren nach Anspruch 12, worin die ethylenisch ungesättigte Carbonsäure oder -anhydrid Maleinsäure oder Maleinsäureanhydrid ist.

14. Verfahren nach irgendeinem der Ansprüche 1 - 13, worin die Dicke des Überzugs aus modifiziertem Polyolefin im Bereich von 300 - 1.500 »m liegt.

15. Verfahren nach irgendeinem der Ansprüche 1 - 14, worin das Rohr eine Wandstärke im Bereich von 2 - 25 mm aufweist.

16. Metallrohr, geeignet zur Verwendung für unterirdische Pipelines und mit einer äußeren Verbundbeschichtung, die widerstandsfähig gegen Beschädigung durch Stöße und gegen kathodische Auflösung ist, wobei die Beschichtung eine gehärtete Epoxyharzzusammensetzung mit einer Dicke von zumindest 300 »m und eine an die innere Schicht gebundene äußere Schicht aus einem modifizierten Polyolefin mit einer Dicke von zumindest 300 »m umfaßt, und wobei dieses modifizierte Polyolefin ein Homopolymer oder Kopolymer aus α-Olefinkohlenwasserstoffen mit 2 - 10 Kohlenstoffatomen ist, das mit einer ethylenisch ungesättigten organischen Carbonsäure oder -anhydrid gepfropft wurde, wobei das modifizierte Polyolefin einen haflenden und schützenden Überzug auf der Epoxyschicht bildet.

17. Verfahren zum Beschichten eines Metallrohrs (12) zur Verwendung bei der Kostruktion einer unterirdischen Pipeline, umfassend:
(a) Bereitstellen einer Heizstation (18), durch die das Rohr axial hindurchbewegt und erhitzt werden kann;
(b) Bereitstellen einer ersten Beschichtungsstation (20) in einer Linie mit der Heizstation, die eine Beschichtung auf die Außenseite des erhitzten Rohres aufbringen kann;
(c) Bereitstellen einer zweiten Beschichtungsstation (30) in einer Linie mit der ersten Beschichtungsstation zum Aufbringen einer darauffolgenden Beschichtung;
gekennzeichnet durch:
(d) Hindurchführen des Metallrohres durch die Heizstation und die erste und zweite Beschichtungsstation, wobei das Rohr in der Heizstation auf eine Temperatur von zumindest 200°C erhitzt wird;
(e) Aufbringen einer gepulverten Epoxyharzzusammensetzung auf das Rohr während dessen Durchgangs durch die erste Beschichtungsstation, wobei die erhaltene Beschichtung auf der Oberfläche des Rohres schmilzt, verschmilzt und in der Folge mit einer Dicke von zumindest 300 »m geliert;
(f) Aufbringen eines modifizierten Polyolefins auf den Rohrabschnitt während dessen Durchgangs durch die zweite Beschichtungsstation, wobei das modifizierte Polyolefin einen Polyolefinüberzug mit einer Dicke von zumindest 300 »m bildet, wobei das modifizierte Polyolefin ein Homopolymer oder Kopolymer aus α-Olefinkohlenwasserstoffen mit 2 - 10 Kohlenstoffatomen ist, das mit einer ethylenisch ungesättigten organischen Carbonsäure oder -anhydrid gepfropft wurde;
wobei die Axialgeschwindigkeit des Rohres durch diese Stationen und der Abstand (d) zwischen der ersten und der zweiten Beschichtungsstation so eingerichtet werden, daß das Polyolefin in der zweiten Beschichtungsstation nach teilweiser, jedoch vor vollständiger, Aushärtung der Epoxyharzzusammensetzung aufgebracht wird.

18. Verfahren nach Anspruch 17, worin der Überzug aus modifiziertem Polyolefin nach dem Gelieren der in der ersten Beschichtungsstation aufgebrachten Beschichtung aus der Epoxyharzzusammensetzung aufgebracht wird.

19. Verfahren nach Anspruch 17 oder 18, worin das modifizierte Polyolefin ein gepulvertes modifiziertes Polyolefin ist.

## Revendications

1. Méthode de revêtement d'un tuyau métallique (12) à utiliser dans les pipelines enterrés pour donner au tuyau une résistance à la dégradation par impact et à la dissociation cathodique, consistant à :
a) chauffer le tuyau à une température d'au moins 200°C,
b) appliquer, à la surface externe du tuyau chauffé, une composition de résine époxy en poudre comprenant une résine époxy et son agent durcissant, la composition de résine époxy ayant un point d'amollissement d'au moins 90°C, ladite composition de résine époxy en poudre fondant et étant coalescente sur le tuyau pour former un revêtement fondu et
c) avant durcissement de la composition de résine époxy, lui appliquer une polyoléfine modifiée, ladite polyoléfine modifiée étant un homopolymère ou copolymère d'alpha-oléfines d'hydrocarbures ayant 2-10 atomes de carbone et que l'on a greffé avec un acide carboxylique organique ou anhydride à insaturation éthylénique, la polyoléfine modifiée formant un revêtement adhérant et protecteur sur le revêtement époxy,
caractérisée en ce que le revêtement fondu de la résine époxy a une épaisseur d'au moins 300 »m et en ce que ledit chauffage du tuyau se produit avant application de la composition de résine époxy et en permettant à cette composition de durcir partiellement mais incomplètement sous l'influence de la chaleur avant application de la polyoléfine modifiée.

2. Méthode de la revendication 1 où la polyoléfine est appliquée après que la composition de résine époxy ait gélifié sur la surface du tuyau.

3. Méthode de la revendication 1 ou de la revendication 2 où le temps de gel de la composition de résine époxy est compris entre 2 et 20 secondes des températures du tuyau de 250°C.

4. Méthode de la revendication 2 ou de la revendication 3 où la période de temps entre la gélification de la composition de résine époxy et l'étape d'application (c) ne dépasse pas 90 secondes.

5. Méthode de la revendication 1 où la polyoléfine modifiée est appliquée à l'étape (c) sur une épaisseur comprise entre 300 et 7000 »m.

6. Méthode de la revendication 5 où le revêtement époxy a une épaisseur comprise entre 300 et 800 »m.

7. Méthode selon l'une quelconque des revendications 1-6 où la poudre de la composition de résine époxy a une grandeur de particules pouvant atteindre 250 »m.

8. Méthode selon l'une quelconque des revendications 1-7 où la poudre de polyoléfine modifiée a une grandeur de particules pouvant atteindre 350 »m.

9. Méthode de la revendication 8 où la polyoléfine modifiée a un point de fusion compris entre 105 et 175°C.

10. Méthode de la revendication 7 où la composition de la résine époxy a un point de fusion compris entre 90 et 130°C.

11. Méthode de la revendication 10 où la composition de la résine époxy a un temps de gel compris entre 2 et 20 secondes à 250°C.

12. Méthode selon l'une quelconque des revendications 1-11 où la polyoléfine modifiée est un nouveau polymère ou copolymère modifié d'au moins l'un d'éthylène et propylène.

13. Méthode de la revendication 12 où l'acide carboxylique ou anhydride à insaturation éthylénique est l'acide maléique ou l'anhydride maléique.

14. Méthode selon l'une quelconque des revendications 1-13 où l'épaisseur de revêtement de la polyoléfine modifiée est comprise entre 300 et 1500 »m.

15. Méthode selon l'une quelconque des revendications 1-14 où le tuyau a une épaisseur comprise entre 2 et 25 mm.

16. Tuyau en métal approprié à une utilisation comme pipeline souterrain et portant un revêtement composite externe résistant à une dégradation par impact et à une dissociation cathodique, ledit revêtement comprenant une composition de résine époxy durcie ayant une épaisseur d'au moins 300 »m et une couche externe d'une polyoléfine modifiée liée à la couche interne, la couche externe ayant une épaisseur d'au moins 300 »m et ladite polyoléfine modifiée étant homopolymère ou copolymère d'alpha-oléfines d'hydrocarbures ayant 2-10 atomes de carbone et que l'on a greffé d'un acide carboxylique organique ou anhydride à insaturation éthylénique, la polyoléfine modifiée formant un revêtement adhérant et protecteur sur la couche époxy.

17. Méthode de revêtement d'un tuyau en métal (12) à utiliser dans la construction d'un pipeline souterrain consistant à :
a) prévoir une station de chauffage (18) par où ledit tuyau peut être axialement déplacé et chauffé ;
b) prévoir une première station de revêtement (20) en ligne avec la station de chauffage et permettant d'appliquer un revêtement à l'extérieur du tuyau chauffé ;
c) prévoir une seconde station de revêtement (30) en ligne avec la première station de revêtement pour appliquer un revêtement subséquent ;
caractérisée en ce que
d) on fait passer le tuyau en métal à travers la station de chauffage et les première et seconde stations de revêtement, le tuyau étant chauffé dans la station de chauffage à une température d'au moins 200°C
e) on applique une composition de résine époxy en poudre au tuyau tandis qu'il passe à travers la première station de revêtement, le revêtement résultant fondant, devenant coalescent et se gélifiant subséquemment sur la surface du tuyau sur une épaisseur d'au moins 300 »m
f) on applique une polyoléfine modifiée à la section de tuyau lors de son passage à travers la seconde station de revêtement, la polyoléfine modifiée formant une couche de polyoléfine d'une épaisseur d'au moins 300 »m, ladite polyoléfine modifiée étant un homopolymère ou copolymère d'alpha-oléfines d'hydrocarbures ayant 2-10 atomes de carbone et que l'on a greffé d'un acide carboxylique organique ou anhydride à insaturation éthylénique ;
la vitesse axiale du tuyau à travers lesdites stations et la distance entre les première et seconde stations de revêtement étant ajustées pour forcer la polyoléfine à être appliquée dans la seconde station de revêtement après durcissement partiel mais avant durcissement complet de la composition de résine époxy.

18. Méthode de la revendication 17 où le revêtement de la polyoléfine modifiée est appliqué après gélification du revêtement de la composition de résine époxy appliquée dans la première station de revêtement.

19. Méthode de la revendication 17 ou de la revendication 18 où la polyoléfine modifiée est une polyoléfine modifiée en poudre.
